# EUROPEAN PATENT APPLICATION

(11) **EP 4 679 169 A1**
(43) Date of publication of application: **14.01.2026**
(21) Application number: 24187053.4
(22) Date of filing: 08.07.2024
(51) Int. Cl.: G02F 1/365, G02F 1/35

(54) **MID-INFRARED SUPERCONTINUUM SYSTEM WITH A SEMICONDUCTOR CORE FIBER**

(71) Applicant: NKT Photonics A/S, 3460 Birkerød (DK)
(72) Inventor: DEMENIKOV, Mads Høj, 3460 Birkerød (DK)
(74) Representative: Zacco Denmark A/S

(57) **Abstract**

Disclosed is a supercontinuum system for generating mid infrared light, comprising: a pulsed light source to generate light pulses; an optical amplifier to amplify the light pulses to amplified pulsed light; a first optical fiber configured to generate a first supercontinuum from the amplified pulsed light; and a second optical fiber optically connected to the first optical fiber and configured to generate a second supercontinuum that is within at least the mid infrared region from 2.5 µm and to 25 µm, wherein the second optical fiber is a solid core fiber comprising a core with at least one semiconductor material from group III and at least another semiconductor material from group V.

## Description

### Field of the invention

The present disclosure relates generally to a supercontinuum (SC) system, more specifically to a mid-infrared (MIR) supercontinuum system. Further, the present disclosure relates to a MIR supercontinuum system with a semiconductor core fiber.

### Background

Visible (VIS) light is defined as light having wavelengths from 0,4µm to 0.7 µm. Further, near-infrared (NIR) light is defined as light having wavelengths from 0.7 µm to 2.5 µm. Even further, mid-infrared (MIR) is defined as light having wavelengths from 2.5 µm to 25 µm. There may be other definitions of the VIS, NIR and MIR spectral ranges, depending on the technical field, but in this disclosure, we will adopt the above definitions.

Supercontinuum (SC) systems that are based on a silica fiber, such as disclosed in the article "Picosecond optical fiber MOPA pumped supercontinuum source with 39 W output power", in Optics Express, Vol. 18, No. 6, 2010, by K. K. Chen et al., can generate light up to 2.3 µm. By increasing the input power, it is possible to generate light up to 2.4 µm in silica. To generate wavelengths that are above 2.4 microns (which is where solitons lose their energy in silica due to material absorption by silica and water molecules), i.e. in the MIR domain, and based on a silica fiber, it is well-known that a silica fiber can be spliced together with another fiber (forming a cascade of fibers) having another material composition and dispersion profile than that of silica.

An example of a mid-infrared supercontinuum systems with cascaded fibers is for example disclosed in the article, "Scaling power, and width, and efficiency of mid-infrared supercontinuum source based on a GeO2-doped silica fiber" in J. Opt. Soc. Am. B 36, A86-A92 (2019), by D. Jain et al. d. Here, a Thulium (Tm)-doped silica fiber is cascaded with a Germania (Ge)-doped silica fiber. The therein disclosed SC system generates both NIR and MIR light, ranging from around 1.8 µm to around 3.2 µm. A similar SC range is demonstrated by Z. Zheng et al. in the article "Supercontinuum Generation by Using a Highly Germania-Doped Fiber With a High-Power Proportion Beyond 2400 nm," in IEEE Photonics Journal, vol. 11, no. 6, pp. 1-8, Dec. 2019. In a third example, M. Y. Koptev et al. describes in the article "Visible to Mid-IR Supercontinuum Generation in Cascaded PCF-Germanate Fiber Using Femtosecond Yb-Fiber Pump" in Fibers 2023, 11, 72, that a silica fiber cascaded with a Ge-doped silica fiber can generate mid-IR, ranging from 450 nm to 2950 nm. Both these disclosures use a Ge-doped silica fiber as the cascaded fiber. It is an advantage to splice Ge-doped fibers to silica fibers because Ge-doped fibers have identical physical properties to those of silica fibers. Nevertheless, Ge-doped cascaded with silica fibers have been demonstrated to provide a SC that only extends up to 3.2 µm.

To provide a MIR SC that extends to even longer wavelengths, other fibers than Ge-doped fibers can be used, and have been used, to generate SC. Such fibers have been shown to extend to more than 3.5 µm. Such fibers may for example be based on materials such as ZBLAN, chalcogenide or tellurite, and may not even need to be cascaded with other fibers to generate a wide spectrum.

For example, in the article "Mid-infrared ZBLAN fiber supercontinuum source using picosecond diode-pumping at 2 µm", Opt. Exp. 21, 24281 - 24287 (2013), by A. M. Heidt et al., a ZBLAN fiber is shown to generate a SC that spans from 750 nm to 4000 nm.

In the article "Single-mode suspended large-core chalcohalide fiber with a low zero-dispersion wavelength for supercontinuum generation" in Optics Express, Vol. 30, No. 1, 3 Jan 2022, by K. Jiao et al, a chalcogenide fiber is shown to generate a SC that spans from 1.6 microns to 12 microns, since chalcogenide fibers have a broad IR transparency range up to 12 microns. Interestingly, the transparency cut-off edge of chalcogenide at 12 microns can be extended to up to 20 microns depending on the mass of anionic elements present in the glasses.

Clearly, chalcogenide fibers seem to be ideal for MIR SC generation. However, depending partly on the material dispersion, the zero-dispersion wavelengths (ZDWs) of step-index chalcogenide fibers are usually located at long wavelengths (>5 µm). Therefore, it is difficult to match the ZDWs of chalcogenide fibers with the operation wavelengths of fiber lasers. Moreover, several properties, including poor mechanical strength and a tendency to crystallize and absorb atmospheric moisture, significantly limit the commercial use of SC sources based on fibers that are either based on tellurite, ZBLAN, or chalcogenide. Another limiting factor is the difficulty of launching pump radiation into such fibers, since, due to their low melting point, they cannot be spliced into standard silica fibers.

Recently, Silicon core fibers (SCFs) have been shown to be good candidates for generating SC in the mid-infrared region, particularly because they have a transmission window from 1.1 µm to 8 µm. By using a single tapered SCF and a pump wavelength of 3 µm, a MIR SC spectrum from 1.62 µm to 5.43 µm has experimentally achieved, see Huang, Meng, et al. "Silicon Core Fibers for Nonlinear Photonics: Applications and Emerging Trends." Journal of Lightwave Technology (2024).

However, using a pump wavelength of 3 µm may not easily be achieved using a fiber laser, and may thus rely on a bulky Ti:Sapphire pumped optical parametric oscillator (OPO).

It is therefore desired to provide a supercontinuum source that is able produce a SC spectrum that extends to more than 3.2 µm, i.e. more than that as produced by a cascaded silica and Germanium based solution. It is also desired to provide a supercontinuum source that is able produce a SC spectrum that extends to more than 3.2 µm, but which does not have the drawbacks of using a fiber based on tellurite, ZBLAN, or chalcogenide. Finally, it is also desired to provide a supercontinuum source that is able to produce a SC spectrum that extends to more than 3.2 µm, but which may not rely on a bulky and costly OPO, but instead may rely on a fiber-based laser.

### Summary

It is an objective of this disclosure to provide a supercontinuum system that may be optimized to generate MIR light, but also NIR light.

Further, it is an objective of this disclosure to provide a supercontinuum system that generates SC with wavelengths above 3.2 µm and may be resistant to crystallization and atmospheric moisture absorption.

Even further, it is an objective of this disclosure to provide a supercontinuum system that generates SC with wavelengths above 3.2 µm and may be based on a fiber-based laser.

These and other objectives have been solved by the supercontinuum system as defined in the claims and as described below in the present disclosure.

In a first aspect of the disclosure, there is disclosed a supercontinuum system for generating mid infrared light, comprising:
- a pulsed light source to generate light pulses;
- an optical amplifier to amplify the light pulses to amplified pulsed light; and
- a first optical fiber configured to generate a first supercontinuum from the amplified pulsed light.

The pulsed light source to generate light pulses is sometimes referred to as a pump source, and the light pulses generated by the pump source is sometimes referred to as pump light.

In a preferred embodiment of the first aspect of the present disclosure, the first optical fiber generates the first continuum that is within the near-infrared (NIR) region, meaning it generates SC light within the region from 0.7 µm to 2.5 µm.

Further, in the first aspect of the present disclosure, the supercontinuum system comprises a second optical fiber optically connected to the first optical fiber and configured to generate a second supercontinuum that is within at least the mid infrared (MIR) region from 2.5 µm to 25 µm.

Even further, in the first aspect of the present disclosure, the second optical fiber is a solid core fiber comprising a core comprising at least one semiconductor material from group III and at least another semiconductor material from group V.

Semiconductor materials are materials that have conductivity between conductors and insulators. Semiconductor materials may be pure elements like silicon (Si) or germanium (Ga), or compounds like gallium arsenide (GaAs) or cadmium selenide (CdSe).

In the periodic table of chemical elements, semiconductor materials are available in different groups. Accordingly, the properties of these materials are associated with their atomic characteristics and vary from one group to another.

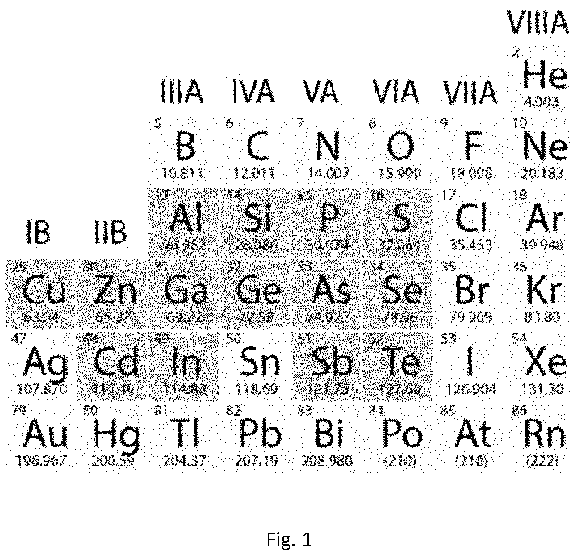

In **Fig. 1****,** the common semiconductor materials are shown how they appear in the periodic table (indicated with the grey boxes), and their location in the different groups ranging from I to VI.

Generally, a semiconductor is a single element like Silicon, Germanium, a compound like GaAs, CdTe/ InP, or an alloy like AlxGa(1-x)As or SixGe(1-x), where "x" in these materials are the part of the specific element that ranges from zero to one.

Silicon material is a group IV element in the periodic table of chemical elements, and it is the most frequently used semiconductor material. These materials are very simple to fabricate and are known in the for example in the semiconductor industry to offer great mechanical and electrical properties.

After Si, the Gallium arsenide (GaAs) semiconductor is the most widely used material in the semiconductor industry and is III and V group element in the periodic table.

In the last decade, it has been known that GaAs has been quite complex to fabricate and has increased the cost of GaAs devices. Using a semiconductor material from group III and V, such as GaAs, in an optical fiber, has therefore also been associated with high cost, and hence not considered as a promising material for fibers.

In addition to the manufacturing complexity of group III and V semiconductor materials, the manufacturing of the fibers themselves with semiconductor materials in group III and V has also only been demonstrated in the last 15 years. For example, fibers made with different group III and V materials have been demonstrated since 2010 to include the following materials (material and year high-lighted):
- **InSb** (J. Ballato et al., "Binary III-V semiconductor core optical fiber," Opt. Express, Vol. 18, No. 5, pp. 4972-9, Mar 2010);
- **GaSb** (B. L. Scott and G. R. Pickrell, "Fabrication of GaSb optical fibers," Processing and Properties of Advanced Ceramics and Composites V: Ceramic Transactions, Vol. 240, pp. 65, Jul 2013; and S. Song et al., "Crystalline GaSb-core optical fibers with roomtemperature photoluminescence," Opt. Mater. Express, Vol. 8, No. 6, pp. 1435-40, Jun 2018);
- **GaAs** (T. Zaengle et al., "A novel route to fibers with incongruent and volatile crystalline semiconductor cores: GaAs," ACS Photonics, Vol. 9, No. 3, pp. 1058-64, Feb 2022); and
- **InP** (T. Zaengle, E. Martinez, T. W. Hawkins, C. McMillen, and J. Ballato, "A novel route to fibers with volatile crystalline semiconductor cores Part 2: Selenides and phosphides," Optical Materials, Vol. 145, pp. 114388, Nov 2023).

Although it has been possible to manufacture group III and V semiconductor fibers since 2010, such as InSb and GaSb, for example using the so-called molten-core fiber drawing technique, the optical transmission-loss has been extremely high in such fibers, making at least InSb and GaSb unsuitable for use in supercontinuum generation. To reduce the optical transmission loss in fibers with InSb and GaSb, it has been proposed to use post-fabrication treatment, such as laser annealing, see for example the article by S. Song et al. However, even with these post-fabrication methods, group III and V semiconductor fibers, with long lengths (more than a few centimeters), have not been fabricated prior to 2022. For this reason, group III and V semiconductor fibers have not been seen as a promising solution to SC generation.

In the articles described above in relation to GaAs and InP, it appears that only in 2022, semiconductor fibers with GaAs and InP is demonstrated to be manufactured in lengths of 100 m using a new manufacturing technique, which is an extension of the previous molten-core fiber drawing technique. With this new technique, the long fiber length has now made it possible to mass-produce fibers at low cost. Further, the new manufacturing technique has further been supplemented with laser annealing to provide group III and V semiconductor fibers with low optical transmission-loss.

With such long and low optical transmission-loss fibers, and the new manufacturing technique, it is now possible to generate supercontinuum in the MIR region by the presently disclosed supercontinuum system.

According to the first aspect of the present disclosure, the supercontinuum system comprises a second optical fiber optically connected to the first optical fiber, and configured to generate a second supercontinuum that is within at least the MIR region from 2.5 µm to 25 µm.

As described in the background section, MIR SC systems have already been made using a Silicon core fiber (SCF). Such a fiber is also a semiconductor fiber, but where the core is made of a group VI material.

Silicon is known to have a two-photon-absorption (TPA) edge around 2.2 µm. The two-photon-absorption significantly reduces the SC generation-process, and therefore does not effectively generate SC below 2.2. µm in Silicon.

However, it may in principle be possible to generate MIR SC in a Silicon core fiber, using for example a pump wavelength of 2.1 µm, thereby generating as SC that spans from 1.64 µm to 3.75 µm, since this has been simulated and described in the article "Designing silicon-core fiber tapers for efficient supercontinuum generation in the greenhouse gas absorption region", in J. Opt. Soc. Am. B 37, 1698-1706 (2020), by J. Campling et al. Nevertheless, this may require a very specific taper-design or using a very small core diameter of 1.275 µm, as shown in the article. Using such a small diameter may imply relatively large optical loss. Further, the optical power of light with a pump wavelength of 2.1 µm in a Silicon core fiber may be depleted by the two-photon-absorption. For these reasons, such a solution has only provided low output power (average output power in the order of 0.2 mW), which is not optimal for practical applications.

The presently disclosed SC system, according to the first aspect of the present disclosure, is able to provide much higher output powers than the above-described system. One reason for this is semiconductor group III and V materials may provide a lower two-photon-absorption edge than that of a group IV material. For example, GaAs may provide a two-photon-absorption edge around 1.75 µm, which is more than 400 nm lower than that of Silicon. Another reason is because the presently disclosed SC system, according to the first aspect, comprises a first optical fiber. This fiber may not only serve to provide SC in the NIR region but may also generate high-power pulses (within the first supercontinuum) for the second optical fiber, thereby generating a much more efficient second SC than if the first optical fiber was not used.

Furthermore, the presently disclosed SC system, according to the first aspect of the present disclosure, is able to provide a much broader extension into the MIR region than the above-described system. One reason for this is semiconductor group III and V materials provide a higher transmission window than that of a group IV material. For example, GaAs may provide a transmission window from around 0.9 µm and up to 16 µm, which is more than 8 µm more than that of Silicon.

With GaAs as example, as described above, and comparison with Silicon, light from a pump source having a pump wavelength of around 2 µm will not be depleted in the same manner as if the material is Silicon. However, if a pump wavelength, such as around 2µm is used, without the first optical fiber, it may still require a relatively small core diameter of the second optical fiber (such as around 1.2 µm), since the ZDW may need to be tailored to the pump wavelength, and therefore still provide low output power. The ZDW in a semiconductor core fiber, such as having a GaAs core, may be tailored to a specific pump wavelength by adjusting the core diameter, since the ZDW increases with the core diameter. To tailor the ZDW of a semiconductor core fiber, the semiconductor core fiber may be manufactured to have a fixed core diameter or a tapered diameter.

The inventors of the presently disclosed SC system, according to the first aspect of the present disclosure, have found that when the first optical fiber is used, together with the second optical fiber having a semiconductor material from group III and V, then it may be possible to use the second optical fiber with a relatively large core diameter (such as around 2 µm or more), and still a relatively low pump wavelength (such as around 2 µm). This may then provide a relatively high output power, particularly because the relatively large core may allow for more throughput, and because the pump power with the relatively low pump wavelength may not be depleted by the two-photon-absorption. Further, when the pump wavelength is relatively low, for example, such as around 2 µm, the inventors have found that the presently disclosed SC system may be used with a pump source that is fiber-based.

In one embodiment of the first aspect of the present disclosure, the first optical fiber may be configured to generate femtosecond solitons from a picosecond pump source. These femtosecond solitons may in some embodiments be generated in a manner that provide a wavelength of the solitons that is longer than the pump wavelength, and therefore also contribute to providing a wavelength that is more optimal for generating the second supercontinuum in the second optical fiber, for example having a relatively large core diameter, such as around 2 µm or more.

In a preferred embodiment of the first aspect of the present disclosure, the second optical fiber is pumped in the anomalous regime, thus at a wavelength above the ZDW of the second optical fiber. For example, if pumping of the second optical fiber, from a pump signal from the first optical fiber, being above 2 µm, such as 2.3 µm, then the core size of the second optical fiber can be manufactured to yield a ZDW around 2.2 µm, which will provide pumping in the anomalous regime. Pumping in the anomalous regime may provide a second SC that has a broader spectrum than if the second optical fiber was pumped in the normal regime (below the ZDW).

In a second aspect of the disclosure, there is disclosed a supercontinuum system for generating mid-infrared (MIR) light, comprising:
- a pulsed light source to generate light pulses;
- an optical amplifier to amplify the light pulses to amplified pulsed light; and
- a semiconductor core optical fiber configured to generate a MIR supercontinuum from the amplified pulsed light,
wherein the semiconductor core optical fiber is a solid core fiber comprising a core with at least one semiconductor material from group III and at least another semiconductor material from group V.

One advantage of the SC system, according to the second aspect, is that semiconductor group III and V materials may provide a lower two-photon-absorption edge than that of a group IV material. Accordingly, a more efficient MIR SC may be generated.

The inventors of the presently disclosed SC system, according to the second aspect of the present disclosure, have found that when the semiconductor core optical fiber having a semiconductor material from group III and V, then it may be possible to use a relatively large core diameter (such as around 2.4 µm or more), and a pump wavelength (from the pulsed light source) that is configured to provide anomalous pumping (such as around 2.8 µm or more, as this wavelength may be above the ZDW). This may then provide a relatively high output power and wide spectrum, particularly because the relatively large core may allow for high throughput.

Using a pump wavelength around 2.8 µm or more, as exemplified above, may be achieved using a fiber-based laser.

In one embodiment of both the first and second aspect of the present disclosure, and when a fiber-based laser is used, as just described above, then this may for example be achieved when the optical amplifier is in the form of a fiber, thereby forming a fiber-amplifier. Such a solution may therefore provide an all-fiber based solution to achieve MIR SC. Further, with such a solution, the coupling-loss may be limited, and therefore provide a more efficient SC generation. In comparison to fibers based on ZBLAN, chalcogenide or tellurite, it has been found that a fiber having a semiconductor material from group III and V is much easier to splice to standard fibers. The solution of using an optical fiber having a semiconductor core material from group III and V in an all-fiber based solution therefore also provides a clear advantage over the prior solutions to generate MIR SC. An optical fiber having a semiconductor core material from group III and V may be easy to splice to another standard fiber, such as to a silica fiber, because the cladding of the optical fiber may be formed by silica.

When splicing to a standard single mode fiber, the standard single mode fiber may have a core size that is much larger than that of optical fiber having a semiconductor core material from group III and V. It is therefore expected that if a standard single mode fiber is spliced directly to an optical fiber having a semiconductor core material from group III and V with a much smaller core diameter, there may be a splicing loss and/or optical loss. Accordingly, to provide a low-loss splice between a standard single mode fiber and the optical fiber having a semiconductor core material form group III and V (with a desired core size, which is smaller than that of the standard single mode fiber), the optical fiber may be tapered down from a core size that matches the standard single mode fiber. Alternatively, to provide low loss, a mode field adaptor may be used between a standard single mode fiber and the optical fiber having a semiconductor core material form group III and V.

In some embodiments of the second aspect of the present disclosure, the pulsed light source generates light pulses with a pump wavelength of more than 4 µm. This may provide a very broad MIR SC spectrum. For example, since the transmission window of GaAs covers up to 16 µm, an optical semiconductor optical fiber with GaAs as the semiconductor material may be an alternative to chalcogenide-based fibers.

In embodiments where a pump wavelength of more than 4 µm is used, the dispersion may be tailored to fit with such pump wavelength. As previously described, this may be achieved by increasing the core diameter of the optical fiber having a semiconductor core material form group III and V, since this shifts the ZDW to a higher wavelength.

Accordingly, in other embodiments where a pump wavelength of more than 4 µm is used, the core diameter of the of the optical fiber having a semiconductor core material form group III and V may be larger than 3 µm. Having a large semiconductor core of 3 µm or more, may imply that the optical loss decreases, in comparison to using a smaller diameter core, which is beneficial for SC generation. Further, it also may provide a better splice-connection, with lower optical loss, to a standard single mode fiber.

It is to be noted that the optical fiber with group III and V semiconductor materials in the core, according to the first and/or second aspect of the present disclosure, also may have a silica cladding as previously described. Silica is known to absorb MIR light, so when MIR light interacts with the cladding through transmission in the fiber, a part pf the generated MIR light may be lost in the lossy silica cladding. To reduce the interaction of MIR with the lossy silica cladding, it may be an advantage to have a relatively large core diameter, such as more than 3 µm, since this also provides for more power to be transmitted. However, the interaction with the lossy silica cladding in an optical fiber with group III and V semiconductor materials in the core may also be reduced in different ways.

Compared to silica fibers, the group III and V core materials, according to the present disclosure, also has a large nonlinearity and a high refractive index, which results in tight mode confinement, so that the nonlinear effects can be enhanced by several orders of magnitude. As a result, propagation in the herein disclosed group III and V semiconductor fiber may be achieved with much lower pump powers (watts compared to kilowatts) and/or with much shorter fiber lengths (centimeters compared to kilometers) to observe efficient nonlinear wavelength conversion. Accordingly, having a semiconductor fiber with group III and V core materials, according to the present disclosure, may allow for efficient SC generation in short fiber lengths and thus a reduced interaction with a lossy silica cladding if such is present. The high refractive index of group III and V core materials therefore may also allow for sufficient SC generation in a semiconductor core fiber, according to the present disclosure, which have a core diameter of for example 2 microns, or more.

Another solution to reduce the interaction with a lossy silica cladding, if such is present, may for example be to introduce, in the group III and V semiconductor fiber as presently disclosed, a cladding ring between the core and the cladding. Such a cladding ring may for example be a silica ring doped with Germanium.

Using a semiconductor fiber with group III and V semiconductor materials in the core, according to the first and/or second aspect of the present disclosure, has shown that it is possible to obtain the desired objectives of the present disclosure.

Further details and advantages of the presently disclosed SC system are disclosed in the following sections.

### Brief description of the drawings

The above and/or additional objects, features and advantages of the present disclosure, will be further described by the following illustrative and non-limiting detailed description of embodiments of the present disclosure, with reference to the appended drawing(s), wherein:
**Fig. 1** shows the common semiconductor materials and how they appear in the periodic table (indicated with the grey boxes), and their location in the different groups ranging from I to VI.
**Fig. 2** shows an example of a supercontinuum system for generating mid infrared light according to one embodiment of the present disclosure.

### Detailed description

### Semiconductor material(s)

In one embodiment of the first aspect of the present disclosure, the at least one semiconductor material is Al and/or Ga.

In another embodiment of the first aspect of the present disclosure, the at least another semiconductor material is As and/or Sb.

In a preferred embodiment, the above embodiments may in combination form one of the combinations: AlGaAs or GaSb.

In a most preferred embodiment of the first aspect of the present disclosure, the at least one semiconductor material is Ga, and the at least another semiconductor material is As, thereby forming GaAs.

Several advantages of GaAs have already been described in the previous sections. For example, GaAs provides a two-photon-absorption edge around 1.75 µm (at 300 degrees Kelvin), which is more than 400 nm lower than that of Silicon. The two-photon-absorption edge for GaAs is 1.65 at 77 degrees Kelvin. Furthermore, GaAs provides a transmission window from around 0.9 µm and up to 16 µm, which is more than 8 µm more than that of Silicon. Also, GaAs provides a high refractive index, which results in tight mode confinement, so that the nonlinear effects can be enhanced by several orders of magnitude. The high refractive index of GaAs is very similar to that of Silica. In fact, the refractive index varies with the wavelength similarly to Silica. In comparison to Silica, GaAs has, as just described, a lower two-photon-absorption edge and a much wider transmission window, making GaAs an ideal candidate for a semiconductor material in the presently disclosed supercontinuum system. As also previously described, the combination of GaAs in the second optical fiber, together with the first optical fiber, provides for a solution where the second supercontinuum is efficiently generated, and may be generated from a fiber-based pump source, where the pump source comprises the pulsed light source to generate light pulses and the optical amplifier to amplify the light pulses to amplified pulsed light. Further, in a related embodiment, the second optical fiber, according to the present disclosure, with GaAs, may be manufactured by the method as described in the article by T. Zaengle et al., "A novel route to fibers with incongruent and volatile crystalline semiconductor cores: GaAs," ACS Photonics, Vol. 9, No. 3, pp. 1058-64, Feb 2022.

In another preferred embodiment of the first aspect of the present disclosure, the at least one semiconductor material is In, and the at least another semiconductor material is P, thereby forming InP.

InP provides a two-photon-absorption edge of around 1.75 µm (at 77 K), but a bit higher at 300 K. Still, the two-photon-absorption edge of InP is more than 400 nm lower than that of Silicon. Furthermore, InP provides a transmission window up to 20 µm, which is more than 12 µm more than that of Silicon.

Also, InP provides a high refractive index, which results in tight mode confinement, so that the nonlinear effects can be enhanced by several orders of magnitude. In comparison to Silica, InP has, as just described, a lower two-photon-absorption edge and a much wider transmission window, making InP an ideal candidate for a semiconductor material in the presently disclosed supercontinuum system. As also previously described, the combination of InP in the second optical fiber, together with the first optical fiber, provides for a solution where the second supercontinuum is efficiently generated, and may be generated from a fiber-based pump source, where the pump source comprises the pulsed light source to generate light pulses and the optical amplifier to amplify the light pulses to amplified pulsed light. Further, in a related embodiment, the second optical fiber, according to the present disclosure, with InP, may be manufactured by the method as described in the article by T. Zaengle, E. Martinez, T. W. Hawkins, C. McMillen, and J. Ballato, "A novel route to fibers with volatile crystalline semiconductor cores Part 2: Selenides and phosphides," Optical Materials, Vol. 145, pp. 114388, Nov 2023.

### First optical fiber

In one embodiment, the first optical fiber is a silica fiber. For example, the silica fiber may be a single-mode fiber (SMF). Several single mode fibers exist as standard fibers. As one example, the SMF-28 is a standard single mode fiber. The SMF-28 is an all-glass fiber, optimized for light propagation at 1310 nm or 1550 nm. As another example, the SM-1950 is another standard single mode fiber. The SM-1950 fiber is optimized for light propagation in the spectral range 1850-2200 nm. By using a single-mode fiber, which is optimized or configured for light propagation with wavelengths above 1800 nm, such as the SM-1950, the first supercontinuum may also be generated to yield and properly guide wavelengths above 2000 nm.

In another embodiment, the first optical fiber has a fiber length, wherein the length is configured to initiate pulse break-up through modulation instability. By configuring the length as described above, the modulation-instability may generate light with longer wavelengths than those emitted by the pulsed light source and from the amplified pulsed light. Accordingly, the first supercontinuum, which is the generated light with longer wavelengths, in the first optical fiber may be generated from modulation instability. Further, in embodiments where the pulsed light source emits picosecond pulses, the generated light (with the longer wavelengths) may, due to the pulse break-up, be broken up to femtosecond solitons. In this manner, the second supercontinuum in the second optical fiber may be generated much more efficiently than if the first optical fiber is not used. An example of length configured to initiate pulse break-up through modulation instability may be a length of more than 10 cm, such as more than 30 cm, such as around 40 cm, for example if the first optical fiber is a silica fiber. However, for other fibers, for example having a higher non-linearly, the length may be shorter.

In yet another embodiment, the first optical fiber generates the first supercontinuum that spans from above 2 µm and up to at least 2.1 µm, more preferably up to at least 2.2 µm, most preferably up to at least 2.3 µm. The first supercontinuum, as here described, may for example be generated by the pulsed light source emitting light, or the light pulses, having a wavelength below 2 µm.

As just described above, the first supercontinuum may generate light with wavelengths that are longer than that of the light in the pump source. The generated longer wavelengths can then be used to pump the second optical fiber to generate the second supercontinuum. Accordingly, the effect of moving the pump wavelength to a higher wavelength for the following fiber in the cascaded setup is hereby presented.

The effect of moving the pump wavelength to a higher wavelength is sometimes referred to as red-shifting, meaning that the generated solitons in the first optical fiber may experience frequency down-shifting due to soliton self-frequency shifting (SSFS), thereby red-shifting the wavelengths in the corresponding spectrum. Soliton-driven non-linear dynamics may typically be achieved by pumping the first optical fiber in the anomalous regime. Accordingly, in a preferred embodiment, the first optical fiber is pumped in the anomalous regime, thus above the zero-dispersion-wavelength (ZDW) of the first optical fiber. In preferred embodiments, the zero-dispersion wavelength of the first optical fiber is located more than 300 nm, more preferably more than 400 nm, such as more than 500 nm, away from the pump source wavelength, i.e. away from the center wavelength of the light pulses and/or the center wavelength of the amplified pulses. For example, in one embodiment, the pump source is configured to emit light pulses with a center wavelength of around 1950 nm, such as around 1946 nm, and the zero-dispersion wavelength of the first optical fiber is at 1310 nm. Such a setup may for example be achieved using a SM-1950, as the SM-1950 may have its zero-dispersion wavelength at 1310 nm, thus providing an embodiment where the zero-dispersion wavelength is located more than 600 nm away from the center wavelength of the light pulses. This example further provides anomalous pumping and may red-shift the wavelength of 1950 nm to a wavelength that is longer than 2.0 µm.

As may be understood from the above, in a preferred embodiment, the first optical fiber is configured to generate the first supercontinuum from light pulses having a center wavelength that is above 1.8 µm, wherein the first supercontinuum is generated by red-shifting the center wavelength to a wavelength above 2.2 µm, such that the red-shifted wavelength is used for pumping the second optical fiber to generate the second supercontinuum. Preferably, the red-shifted wavelength is located more than 200 nm, more preferably more than 300 nm or 400 nm, away from the two-photon-absorption edge. For example, if the red-shifted wavelength is located 2.3 µm, and the two-photon is located at around 1.75 µm, the difference is more than 500 nm. Such a difference may for example be achieved when the semiconductor material is either GaAs or InP. In this example, the red-shifted wavelength, used as pump wavelength for the second optical fiber, is ensured not be depleted by the two-photon-absorption of the first optical fiber, and thus provides very efficient SC generation in the second optical fiber.

Soliton self-frequency shifting (SSFS) is, as described above, a non-linear process, which in itself is responsible for supercontinuum generation. The non-linear processes that occur in each of the two optical fibers, according to presently disclosed supercontinuum system, may typically be very different, particularly because the ZDWs and the pump wavelengths may be very different for the two optical fibers.

In one embodiment, the first optical fiber generates the first supercontinuum that spans more than 200 nm, preferably more than 300 nm.

One purpose of the first optical fiber may not necessarily be to achieve the broadest possible SC, but rather to red-shift the center wavelength of the light pulses from the pulsed light source, such that mid-infrared light may be generated from as long a wavelength as possible in the first optical fiber. Since light or solitons above 2.4 microns in silica is lost due to material absorption by silica and water molecules, silica may not always be ideal red-shifting the center wavelength. It may for example be more ideal to use a first optical fiber, which provides light transmission or propagation in the mid-IR band.

Thus, in other embodiments, first optical fiber is a semiconductor core fiber, preferably wherein the core of the semiconductor core fiber comprises a core with at least one semiconductor material from group III and at least another semiconductor material from group V. In the embodiment, where the first optical fiber is similar to the second optical fiber in core material, the two optical fibers may comprise a core having different diameters, whereby different zero-dispersion-wavelengths are provided in the two optical fibers. In this manner, different supercontinua may be generated in the two optical fibers, allowing for SC extension further into the mid-IR band. Further, in some embodiments, the core diameter of the second optical fiber may be larger than the core diameter of the first optical fiber, such that the ZDW is moved to higher wavelengths as light propagates from the first optical fiber to the second optical fiber.

### Second optical fiber

In one embodiment, the second optical fiber expands the first supercontinuum by the second supercontinuum to a combined supercontinuum that extends to more than 3.2 µm, more preferably to more than 3.5 µm. The expansion may be due to solitons in the first supercontinuum being red-shifted and used to pump the second optical fiber. The combined supercontinuum, i.e. the expanded first SC, is ultimately the SC output from the second optical fiber. The expanded first supercontinuum, or the combined supercontinuum, may be dependent on the power of the pulsed light source, but also dependent on the repetition rate of the pulsed light source. Finally, the expansion may be dependent on the power output from the first optical fiber, and thus the length of the first optical fiber.

In another embodiment, the second optical fiber expands the first supercontinuum by the second supercontinuum to a combined supercontinuum that spans more than 1 µm, such as more than 2 µm, preferably more than 3 µm, more preferably more than 4 µm. The expansion may be due to solitons in the first supercontinuum being red-shifted and used to pump the second optical fiber. The combined supercontinuum, i.e. the expanded first SC, is ultimately the SC output from the second optical fiber. The expanded first supercontinuum, or the combined supercontinuum, may be dependent on the power of the pulsed light source, but also dependent on the repetition rate of the pulsed light source. Finally, the expansion may be dependent on the power output from the first optical fiber, and thus the length of the first optical fiber.

In a preferred embodiment, the second optical fiber is optically connected to the first optical fiber by a splice between the first optical fiber and the second optical fiber. As previously described, the two optical fibers may have different core diameter. When splicing such two optical fibers, this may result in a slicing-loss. To reduce optical loss, the second optical fiber may be tapered fiber, from a large diameter to a smaller diameter, for example such that two optical fibers match each other in core diameter.

In another preferred embodiment, the second optical fiber is a non-tapered fiber. This may for example be achievable, still with relatively low loss, when the core diameter of the second optical fiber is close to match the core diameter of the first optical fiber, which for example may be the case when both the first optical fiber and the second optical fiber have the same core material, and only differs in core diameter.

The second optical fiber has a length that is shorter than 1 m, more preferably shorter than 10 cm, most preferably shorter than 1 cm. It is advantageous to use a short fiber as possible since this may provide a reduced optical loss. Since the group III and V semiconductor material provide a high refractive index and high nonlinearity, the second optical fiber, according to the first aspect of the present disclosure, makes this possible.

In a most preferred embodiment, the second optical fiber has a core diameter that is larger than 2 µm. This core diameter may provide for relatively small optical loss, both relatively low transmission-loss, but also relatively low splicing-loss.

### Third optical fiber

In some embodiments, the supercontinuum system further comprises a third optical fiber being optically connected to both the first and the second optical fiber, wherein the third optical fiber is configured to generate a third supercontinuum. The third supercontinuum may expand the second supercontinuum even further, for example by a configuring the first and the second optical fiber such that they each are responsible for red-shifting the light pulses from the pulsed light source in a cascaded manner. This may be achieved by ensuring that the redshifted light pulses from the first optical fiber also have a wavelength that is above the ZDW of the second optical fiber.

In related embodiments, the third optical fiber is optically connected between the first and the second optical fiber, or wherein the third optical fiber is optically connected to the second optical fiber by a splice between the second optical fiber and the third optical fiber.

### Amplified pulses

In one embodiment, the amplified pulsed light comprises light pulses with a pulse duration that are below 1 ps, such as less than 500 fs.

In a preferred embodiment, the amplified pulsed light comprises light pulses with a pulse duration that is between 1 ps and 50 ps. Preferably, the pulse duration is between 20 ps and 40 ps. In these embodiments, the first optical fiber may have a length configured to initiate pulse-break up, whereby the amplified pulses, according to these embodiments, are broken up to femtosecond pulses, such that the femtosecond pulses are used to generate the second supercontinuum in the second optical fiber.

In another preferred embodiment, the amplified pulsed light comprises light pulses with a pulse duration that is between 50ps and 100 ps. Also in this embodiment, the first optical fiber may have a length configured to initiate pulse-break up, whereby the amplified pulses, according to this embodiment, are broken up to femtosecond pulses, such that the femtosecond pulses are used to generate the second supercontinuum in the second optical fiber.

In some embodiments, the amplified pulsed light comprises a wavelength that is longer than 1.9 µm. For example, the pulsed light source may be a gain switched diode configured to emit at light pulses with a wavelength longer than 1.9 µm, which may be amplified in the optical amplifier. The gain switched diode may for example emit light pulses at 1946 nm. Alternatively, the pulsed light source may be a fiber mode-locked laser, for example emitting light pulses at 1975 nm.

In preferred embodiments, the optical amplifier comprises two or more amplifier stages, for example wherein each of the two more amplifier stages is thulium doped fiber amplifier. Using two or more amplifier stages may allow for the amplified pulsed light having a peak power between 10 kW and 100 kW, or up to 300 kW.

### Examples

### Example 1 - Generation of supercontinuum in the mid IR region

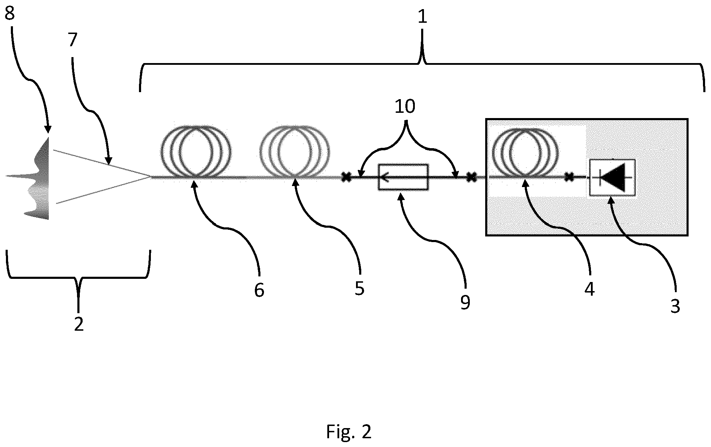

**Fig. 2** shows an example of a supercontinuum system **1** for generating mid infrared light **2** according to one embodiment of the present disclosure. The system comprises a pulsed light source **3** to generate light pulses. Further, the system **1** comprises an optical amplifier **4** to amplify the light pulses to amplified pulsed light. The pulsed light source **3** and the optical amplifier **4** may be integrated in a box, as also shown in **Fig. 2****.** Even further, the system **1** comprises a first optical fiber **5** configured to generate a first supercontinuum from the amplified pulsed light. Finally, the system **1** comprises a second optical fiber **6** optically connected to the first optical fiber **5** and configured to generate a second supercontinuum **7** that is within at least the mid infrared region from 3 µm and to 25 µm. The supercontinuum **7** as exiting the second optical fiber **6** is shown in **Fig. 2** as a diverging light beam **7** having a broadband spectrum **8** or supercontinuum spectrum **8.** The second optical fiber **6** is a solid core fiber comprising a core with at least one semiconductor material from group III and at least another semiconductor material from group V.

In **Fig. 2** is also shown an isolator **9** between the optical amplifier **4** and the first optical fiber **5.** Before and after the isolator **9** is a small piece of fiber **10.** In this example, the small piece of fiber **10** is a standard single mode fiber, called SM-1950. The SM-1950 fiber is optimized for light propagation in the spectral range 1850-2200 nm. The length of the SM-1950 fiber before the isolator **9** has a short length of approximately 20 cm to minimize pulse break-up and broadening, as this would introduce additional loss in the isolator **9.** The short piece of fiber **10** after the isolator is connected to the first optical fiber **6,** which in this example is also SM-1950. Thus, the total length of the SM-1950 fiber after the isolator **9** is relatively long, i.e. around 40 cm, whereby it is configured to initiate pulse break-up through modulation instability, whereby longer wavelength femtosecond solitons are generated. These solitons form the first supercontinuum. This first supercontinuum facilitates more efficient supercontinuum generation in the second optical fiber **6.**

The pulsed light source **3** is in this example a laser diode having a center wavelength of 1946 nm. The optical amplifier **4** comprises a three-stage thulium-doped fiber amplifier. As one example hereof, the optical amplifier comprises two core-pumped pre-amplifier stages and one cladding-pumped power amplifier stage. A single pre-amplifier pump may be used for the two core-pumped pre-amplifier stages. The single pre-amplifier pump may comprise a fiberized 1550 nm laser diode amplified in an erbium/ytterbium-doped fiber pumped by a 915 nm diode. The pre-amplified signal may for example be split in two by a 50:50 splitter, such that each of the two signals is pumped into a pre-amplifier stage. Each of the three thulium-doped fiber amplifier stages comprises a thulium doped fiber, each having a length between 1 and 10 meters. For example, a first thulium-doped fiber may have a length of 10 meters, a second thulium-doped fiber may have a length of 6 meters, and a third thulium-doped fiber may have a length of 1.5 meters. Also, the core diameter of the three thulium doped fibers may vary in size, preferably between 1 and 15 microns, more preferably between 5 microns and up to 10 microns. For example, a first thulium-doped fiber may have a core diameter of 5 microns, a second thulium-doped fiber may have a core diameter of 9 microns, and a third thulium-doped fiber may have a core diameter of 10 microns. In this manner, as described in this example, the peak output power from the third thulium-doped fiber, and thus into the first optical fiber, may be between 1 W and 2 W, which is able to generate the first supercontinuum in the first optical fiber.

## Claims

1. A supercontinuum system for generating mid infrared light, comprising:
- a pulsed light source to generate light pulses;
- an optical amplifier to amplify the light pulses to amplified pulsed light;
- a first optical fiber configured to generate a first supercontinuum from the amplified pulsed light; and
- a second optical fiber optically connected to the first optical fiber and configured to generate a second supercontinuum that is within at least the mid infrared region from 3 µm and to 25 µm,
wherein the second optical fiber is a solid core fiber comprising a core with at least one semiconductor material from group III and at least another semiconductor material from group V.

2. The supercontinuum system according to claim 1, wherein the at least one semiconductor material is Al and/or Ga.

3. The supercontinuum system according to claim 2, wherein the at least another semiconductor material is As and/or Sb.

4. The supercontinuum system according to claim 2 and 3, wherein the at least one semiconductor material is Ga, and the at least another semiconductor material is As, thereby forming GaAs.

5. The supercontinuum system according to claim 1, wherein the at least one semiconductor material is In, and the at least another semiconductor material is P, thereby forming InP.

6. The supercontinuum system according to any of the preceding claims, wherein the first optical fiber is a silica fiber.

7. The supercontinuum system according to any of the preceding claims, wherein the first optical fiber generates the first supercontinuum that spans from above 2 µm and up to at least 2.1 µm, more preferably up to at least 2.2 µm, most preferably up to at least 2.3 µm.

8. The supercontinuum system according to any of the preceding claims, wherein the first optical fiber generates the first supercontinuum that spans more than 200 nm, more preferably more than 300 nm.

9. The supercontinuum system according to claim 7 or 8, wherein the second optical fiber expands the first supercontinuum by the second supercontinuum to a combined supercontinuum that extends to more than 3.2 µm, more preferably to more than 3.5 µm.

10. The supercontinuum system according to claim 7 or 8, wherein the second optical fiber expands the first supercontinuum by the second supercontinuum to a combined supercontinuum that spans more than 1 µm, such as more than 2 µm, preferably more than 3 µm, more preferably more than 4 µm.

11. The supercontinuum system according to any of the preceding claims, wherein the second optical fiber is optically connected to the first optical fiber by a splice between the first optical fiber and the second optical fiber.

12. The supercontinuum system according to any of the preceding claims, wherein supercontinuum system further comprises a third optical fiber being optically connected to both the first and the second optical fiber, and wherein the third optical fiber is configured to generate a third supercontinuum.

13. The supercontinuum system according to claim 12, wherein the third optical fiber is optically connected between the first and the second optical fiber, or wherein the third optical fiber is optically connected to the second optical fiber by a splice between the second optical fiber and the third optical fiber.

14. The supercontinuum system according to any of the preceding claims, wherein the amplified pulsed light comprises light pulses with a pulse duration that is between 1 ps and 50 ps, preferably between 20 ps and 40 ps.

15. The supercontinuum system according to any of the preceding claims, wherein the amplified pulsed light comprises a wavelength that is longer than 1.9 µm.

16. The supercontinuum system according to any of the preceding claims, wherein the second optical fiber has a length that is shorter than 1 m, more preferably shorter than 10 cm, most preferably shorter than 1 cm.

17. The supercontinuum system according to any of the preceding claims, wherein the second optical fiber has a core diameter that is larger than 2 µm.
